# FASCICULE DE BREVET EUROPEEN

(11) **EP 2 125 331 B1**
(45) Date de publication et mention de la délivrance du brevet: **22.07.2015**
(21) Numéro de dépôt: 08762122.3
(22) Date de dépôt: 19.02.2008
(51) Int. Cl.: B29C 49/56, B29C 49/06, B29C 49/36

(54) **DISPOSITIF DE MOULAGE POUR LA FABRICATION DE RECIPIENTS EN MATERIAU THERMOPLASTIQUE**
FORMVORRICHTUNG ZUR HERSTELLUNG VON GEFÄSSEN AUS EINEM THERMOPLASTISCHEN MATERIAL
MOULDING DEVICE FOR MAKING VESSELS OF A THERMOPLASTIC MATERIAL

(30) Priorité: 27.02.2007 FR 0701396
(43) Date de publication de la demande: 02.12.2009
(73) Titulaire: Sidel Participations, 76930 Octeville Sur Mer (FR)
(72) Inventeur: ROUSSEAU, Nicolas, F-76930 Octeville-sur-Mer (FR); DANEL, Laurent, F-76930 Octeville-sur-Mer (FR)
(74) Mandataire: Siloret, Patrick
(86) Numéro de dépôt international: PCT/FR2008/050274
(87) Numéro de publication internationale: WO 2008/113932

(56) Documents cités:
- WO-A-01/17753
- WO-A-99/62692
- FR-A- 1 238 421
- JP-A- 9 057 838
- US-A- 3 994 655

## Description

La présente invention concerne d'une façon générale le domaine des dispositifs de moulage pour la fabrication par soufflage ou étirage-soufflage de récipients à partir de préformes en matériau thermoplastique chauffé.

De manière générale, l'invention concerne les dispositifs de moulage comportant au moins un moule comprenant au moins deux demi-moules déplaçables mutuellement entre une position d'ouverture dans laquelle ils sont écartés l'un de l'autre et une position de fermeture dans laquelle ils sont étroitement accolés l'un contre l'autre par des faces d'appui respectives définissant un plan de joint.

Il est principalement connu selon l'art antérieur deux types de dispositifs de moulage pour la fabrication de récipients.

Un premier dispositif de moulage porte sur des dispositifs de moulage avec une ouverture du type crocodile, c'est-à-dire avec une moitié du dispositif de moulage qui est fixe sur un carrousel tournant rotatif, une autre moitié amovible pivotante selon un mouvement descendant dirigé radialement vers l'extérieur et un fond de moule axialement amovible. Toutefois, ce dispositif de moulage, du fait de son ouverture de la moitié mobile radialement vers l'extérieur, entraîne un effort centrifuge très pénalisant et nécessite des réglages relativement précis pour le synchronisme avec le mouvement du fond de moule.

Un deuxième type de dispositif de moulage porte sur des dispositifs de moulage du type ouverture en portefeuille, notamment tel que décrit dans le document FR 2 863 930, dans lequel le dispositif de moulage comprend deux demi-moules avec au moins deux bords respectifs avec leurs faces d'appui respectives qui sont agencées sous forme de deux bords à recouvrement mutuel avec des faces respectives en coopération en vis-à-vis radial dans la position de fermeture du moule, des moyens de verrouillage étant fonctionnellement associés aux dits bords à recouvrement de manière à empêcher l'ouverture du moule lors de l'opération de soufflage du récipient. Autrement dit, les deux demi-moules sont articulés mutuellement en rotation sur un arbre sensiblement parallèle à un côté du plan de joint et les moyens de verrouillage sont prévus du côté du moule opposé audit arbre des deux demi-moules.

De manière pratique, chaque demi-moule comprend un porte-moule auquel est fixée intérieurement une coquille munie d'une demi-empreinte de moulage, le plan de joint étant défini par les deux coquilles accolées en position de fermeture du moule et les moyens de verrouillage sont supportés par les deux porte-moules.

De manière alternative et tel que décrit dans le document FR 2 841 495, il est également possible de prévoir des dispositifs de moulage du type portefeuille comportant un moule en trois parties, à savoir deux demi-moules pour le corps du récipient et un fond de moule pour le fond du récipient, les parties inférieures des deux demi-moules et la partie supérieure du fond de moule comportant des moyens mutuellement emboîtables dans la position de fermeture du moule pour assurer la rigidité axiale du moule en présence de la pression de soufflage.

Le document FR-1238421 décrit un dispositif de moulage selon le préambule de la revendication 1.

Les dispositifs de moulage connus selon l'art antérieur, bien que satisfaisants du point de vue de la qualité du récipient moulé, présentent certains inconvénients entraînant un frein majeur dans l'augmentation de la cadence de production des récipients moulés par heure à partir de ces dispositifs de moulage.

Tout d'abord, la chaîne cinématique du transfert du récipient au dispositif de moulage jusqu'au récepteur final du récipient moulé est relativement longue et implique la présence de nombreuses pièces en série.

De plus, la commande de l'ouverture et de la fermeture des moules ainsi que de l'actionnement des moyens de verrouillage du moule nécessitent le réglage de nombreuses pièces susceptibles de présenter des jeux importants.

En effet, de manière courante, la commande des moyens d'ouverture et de fermeture ainsi que la commande des moyens de verrouillage et de déverrouillage des dispositifs de moulage sont réalisées à l'aide d'un premier double ensemble à came et à galet pour la commande de l'ouverture et de la fermeture et d'un second double ensemble à came et à galet respectif pour la commande du verrouillage et du déverrouillage, les deux ensembles étant pilotés indépendamment l'un de l'autre de manière mécanique, ce qui est susceptible de quadrupler les problèmes de réglage et d'entraîner une perte de temps lors de ce réglage. Il serait donc particulièrement intéressant de réaliser un dispositif de moulage dont les opérations d'ouverture et de fermeture ainsi que les opérations de verrouillage et de déverrouillage du dispositif de moulage sont réalisées par une seule commande.

Par ailleurs, les moyens de verrouillage/déverrouillage des dispositifs de moulage, en général prévus le long d'un bord respectif des demi-moules, occupent un volume d'encombrement susceptible de nuire au transfert du récipient une fois celui-ci moulé.

Par ailleurs, les moyens de verrouillage/déverrouillage actuellement utilisés sont souvent associés à des doigts de verrouillage qu'il convient de changer régulièrement du fait de leur usure.

Il serait également particulièrement intéressant de réaliser un dispositif de moulage permettant de faciliter le verrouillage et de déverrouillage des deux demi-moules.

Afin d'améliorer la qualité du récipient moulé, notamment en terme de lisibilité du plan de joint, il est nécessaire de prévoir une chambre de compensation à l'intérieur du moule dont le mode de fonctionnement est synchronisé avec les moyens de verrouillage et de déverrouillage, ce qui entraîne des difficultés de réglage supplémentaires.

En effet, dans les dispositifs de moulage du type à portefeuille, il est prévu, en coopération avec un demi-moule, une chambre de compensation de pression afin de garantir l'étanchéité à l'intérieur du moule. De manière plus précise, le document FR 2 813 231 présente un dispositif de moulage comportant, entre deux entités constituées par un élément de moule et son support, une chambre de compensation dans laquelle un fluide sous pression est injecté pour écarter l'élément de moule de son support, la chambre étant agencée entre au moins l'un des éléments de moule et le support associé pour pousser transversalement l'élément de moule d'une position reculée vers une position avancée, en direction de l'autre élément.

Toutefois, la chambre de compensation ne permet pas de compenser des bouteilles supérieures à 1,5 litre. De plus, du fait que la chambre de compensation n'est présente que sur un demi-moule, il est possible d'avoir un décalage des plans de joints dû à l'inhomogénéité des rigidités entre les deux demi-moules.

De même, la présence de cette chambre de compensation est relativement complexe à mettre en forme et à réaliser. Il serait donc particulièrement intéressant de réaliser un dispositif de moulage ne nécessitant pas la présence d'une chambre de compensation entre le support de moule et le bloc de moule d'un demi-moule.

Par ailleurs, le rendement thermique des dispositifs de moulage selon l'art antérieur est diminué du fait de la présence de nombreux échanges de flux thermiques entre les au moins deux demi-moules et le fond de moule, ce rendement étant d'autant plus diminué en configuration de soufflage HR (Heat resistant) puisque dans ce cas le fond de moule est refroidi et que les au moins deux demi-moules sont réchauffés.

Les dispositifs de moulage tels qu'actuellement réalisés ne peuvent atteindre qu'une cadence maximum de 1800 bouteilles par heure et par dispositif de moulage, du fait de la présence de nombreuses erreurs dynamiques, notamment des problèmes vibratoires et de déformation des systèmes de commande à came et à galet, ainsi que des problèmes de charge et d'usure des dispositifs de moulage.

La tolérance des réglages est de plus également très faible, c'est-à-dire de l'ordre du dixième de millimètre. Il serait donc particulièrement intéressant de réaliser un dispositif de moulage avec des tolérances de réglage plus grandes.

La hauteur totale de la chambre de compensation est également limitée, ainsi que les réglages délicats.

De plus, la connectique fluidique est parfois problématique du fait d'un encombrement relativement important du dispositif de moulage.

Il est connu du document JP 09 057838 de réaliser un dispositif de moulage pour la fabrication par soufflage ou étirage-soufflage de récipients à partir de préformes en matériau thermoplastique chauffé, ledit dispositif comportant au moins un moule comprenant au moins deux demi-moules et des moyens d'entraînement propres à déplacer les demi-moules entre une position d'ouverture dans laquelle ils sont écartés l'un de l'autre et une position de fermeture dans laquelle ils sont étroitement accolés l'un contre l'autre par des faces d'appui respectives définissant un plan de joint et dans laquelle ils définissent une cavité de moulage, les deux demi-moules étant articulés l'un à l'autre en rotation autour d'un axe d'articulation contenu dans le plan de joint et perpendiculaire à l'axe de la cavité de moulage, ledit axe d'articulation étant sous les deux demi-moules. Toutefois, ce mode de réalisation ne permet pas de garantir un parfait verrouillage des deux demi-moules au moment du soufflage du récipient.

Il serait donc particulièrement intéressant de réaliser un dispositif de moulage permettant notamment : d'améliorer la chaîne cinématique; d'améliorer la qualité du récipient moulé, c'est-à-dire d'obtenir un récipient dont les plans de joints ne sont pas ou à peine visibles ; d'améliorer le rendement thermique du dispositif de moulage, à savoir de diminuer les pertes de chaleur ; d'augmenter les cadences mécaniques, c'est-à-dire d'aller au-delà d'une cadence de production de 1800 bouteilles par heure et par dispositif de moulage ; d'améliorer les tolérances de réglage de ce dispositif ; de diminuer les connections fluidiques entre le dispositif de moulage ; de minimiser les coûts de production ; de pouvoir utiliser des matériaux plus légers et mieux adaptés pour tout poste de soufflage ; de garantir un verrouillage des demi-moules au moment du soufflage de la préforme, ainsi que de robotiser les changements des différentes pièces du moule, à savoir les changements de coquilles ou des éléments de moule dans lesquels sont formés les empreintes du récipient devant être soufflé.

Afin de répondre à ces différents éléments, la présente invention porte sur un dispositif de moulage pour la fabrication par soufflage ou étirage-soufflage de récipients à partir de préformes en matériau thermoplastique chauffé, ledit dispositif comportant au moins un moule comprenant au moins deux demi-moules et des moyens d'entraînement propres à déplacer les demi-moules entre une position d'ouverture dans laquelle ils sont écartés l'un de l'autre et une position de fermeture dans laquelle ils sont étroitement accolés l'un contre l'autre par des faces d'appui respectives définissant un plan de joint et dans laquelle ils définissent une cavité de moulage, les deux demi-moules étant articulés l'un à l'autre en rotation autour d'un axe d'articulation contenu dans le plan de joint et perpendiculaire à l'axe de la cavité de moulage, ledit axe d'articulation étant sous les deux demi-moules, des moyens de verrouillage des deux demi-moules dans leur position de fermeture étant également prévus, chaque demi-moule présentant une zone surfacique extérieure apte à venir en butée contre une zone surfacique intérieure de moyens de verrouillage des deux demi-moules en position de fermeture, la zone surfacique extérieure de chaque demi-moule étant de forme complémentaire à la zone surfacique intérieure des moyens de verrouillage, de manière que, quand les deux zones surfaciques sont mises en contact l'une contre l'autre, il en résulte la formation de deux efforts dirigés en sens inverse radialement vers l'intérieur sur les deux demi-moules et lesdits moyens de verrouillage se présentant sous la forme d'une bride propre à ceindre les deux demi-moules en position de fermeture, caractérisé en ce que les moyens d'entraînement comprennent un équipage mobile, se présentant sous la forme d'un manchon propre à entourer au moins partiellement les deux demi-moules, déplaçable selon une direction sensiblement parallèle à l'axe de la cavité de moulage et coopérant avec les deux demi-moules de manière que, lorsque l'équipage mobile est en position basse, les deux demi-moules sont en position d'ouverture et que, lorsque l'équipage mobile est en position haute, les deux demi-moules sont en position de fermeture, et en ce que ladite bride appartient auxdits moyens d'entraînement des deux demi-moules.

Avantageusement, les zones surfaciques sont sensiblement tronconiques.

Selon une forme de réalisation avantageuse, l'axe d'articulation est situé en dessous des deux demi-moules à distance de ceux-ci.

De manière avantageuse, les moyens d'entraînement comprennent des moyens à galets suiveurs et cames coopérants prévus sur les faces latérales des deux demi-moules au voisinage de leurs faces d'appui respectives et sur l'équipage mobile.

Selon une première forme de réalisation des moyens à galets suiveurs et cames, deux galets suiveurs sont montés sur deux faces latérales appartenant respectivement aux deux demi-moules au voisinage de leurs faces d'appui respectives et deux cames sont prévues respectivement sur l'équipage mobile.

Selon une seconde forme de réalisation des moyens à galets suiveurs et cames, deux galets suiveurs sont montés sur l'équipage mobile et deux cames sont prévues sur deux faces latérales appartenant respectivement aux deux demi-moules au voisinage de leurs faces d'appui respectives.

Afin de limiter l'usure entre les deux zones surfaciques, les zones surfaciques sont sensiblement tronconiques.

Afin de commander le déplacement de l'équipage mobile selon une direction sensiblement parallèle à l'axe de la cavité de moulage, un galet propre à coopérer avec une came est fixé sur l'équipage mobile.

De manière avantageuse, l'équipage mobile est apte à coulisser sur au moins un rail de guidage prévu fixe par rapport à l'axe d'articulation.

De manière préférentielle, le rail de guidage est prévu sur un élément support de l'axe d'articulation des deux demi-moules.

Selon une forme de réalisation, l'équipage mobile est solidarisé à au moins un chariot apte à coulisser sur le rail de guidage.

Afin de faciliter le déplacement de l'équipage mobile depuis la position d'ouverture vers la position de fermeture des deux demi-moules, le dispositif de moulage selon l'invention comprend des moyens de rappel, préférentiellement des moyens à piston, entre l'équipage mobile et un élément support de l'axe d'articulation.

Afin de faciliter la maintenance des différentes pièces constitutives des deux demi-moules, chaque demi-moule comprend une partie basse fixée à l'axe d'articulation et une partie haute comprenant au moins un porte-coquille et une coquille dans laquelle est formée au moins partiellement l'empreinte du récipient à mouler.

Avantageusement, les moyens de verrouillage des deux demi-moules en position de fermeture sont aptes à prendre appui sur les parties hautes des deux demi-moules.

Afin de remplacer facilement les moyens de verrouillage, un ruban de butée est fixé sur la surface extérieure du porte-coquille, la zone surfacique extérieure du ruban étant apte à venir en butée contre la zone surfacique intérieure des moyens de verrouillage des deux demi-moules.

Afin de diminuer le temps de transfert d'une ébauche soufflée et d'éviter de devoir remonter l'ébauche une fois celle-ci soufflée, le dispositif de moulage comprend un fond de moule axialement mobile et couplé à l'aide de moyens de solidarisation à un des deux demi-moules.

De manière à synchroniser le mouvement de coulissement axial du fond de moule avec le mouvement d'ouverture/fermeture des demi-moules, les moyens de solidarisation comprennent au moins un galet, solidarisé au fond de moule, propre à coopérer avec au moins une came fixée sur un des deux demi-moules, de sorte que le fond de moule soit dans une position haute quand les deux demi-moules sont dans leur position de fermeture et que le fond de moule soit dans une position basse quand les deux demi-moules sont dans leur position d'ouverture.

Afin de permettre une légère déformation et un meilleur blocage des demi-moules lors de l'opération de soufflage de l'ébauche, le ruban de butée est en contact tangentiel avec les moyens de verrouillage en position haute de l'équipage mobile en dehors du soufflage de l'ébauche.

De manière avantageuse, le ruban de butée est propre à être plaqué contre la surface intérieure des moyens de verrouillage lors du soufflage de l'ébauche.

La présente invention est maintenant décrite à l'aide d'un exemple uniquement illustratif et nullement limitatif de la portée de la présente invention, et à partir des figures suivantes dans lesquelles :
- La figure 1 est une vue en perspective du dispositif de moulage selon l'invention dans la position d'ouverture des deux demi-moules, le moyen d'entraînement des deux demi-moules n'étant pas représenté par mesure de clarté ;
- La figure 2 est une vue en perspective du dispositif de moulage selon l'invention dans sa position d'ouverture ;
- La figure 3 est une vue en perspective du dispositif de moulage selon l'invention dans sa position de fermeture ;
- La figure 4 est une vue en perspective d'une forme de réalisation d'un fond de moule axialement mobile apte à être intégré au dispositif de moulage selon l'invention ;
- La figure 5 est une vue partielle en perspective des moyens de solidarisation entre le fond de moule illustré à la figure 4 et un demi-moule du dispositif selon l'invention, en position de fermeture pour soufflage ;
- La figure 6 est une vue partielle en perspective des moyens de solidarisation entre le fond de moule illustré à la figure 4 et un demi-moule du dispositif selon l'invention, en position d'ouverture pour transfert de l'ébauche soufflée ;
- La figure 7 est une vue en perspective d'une forme de réalisation particulière du dispositif de moulage selon l'invention ;
- La figure 8 est une vue supérieure d'un demi-moule en position de fermeture et verrouillé par des moyens de verrouillage.

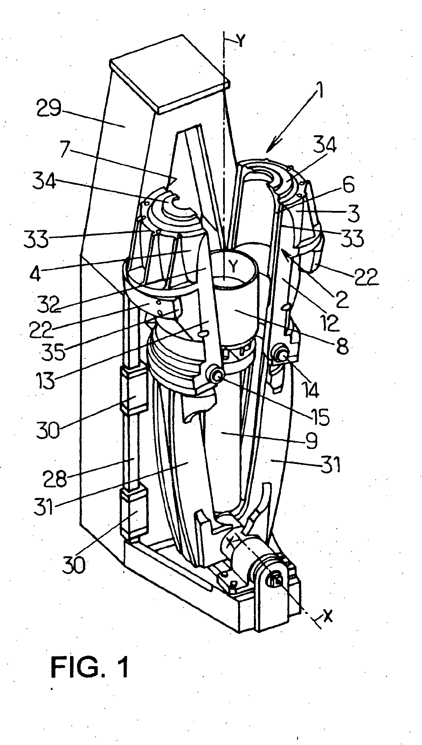

Il est représenté sur la figure 1 une vue en perspective d'un dispositif 1 de moulage pour la fabrication par soufflage ou étirage-soufflage de récipients à partir de préformes en matériau thermoplastique chauffé.

Dans la suite de la description, il sera utilisé les termes de vertical, horizontal, haut, bas, etc...en référence aux dessins qui illustrent une disposition largement répandue d'un dispositif de moulage. Cependant, ces termes ne sont utilisés que pour la clarté de la description et ne doivent pas être interprétés comme étant des limitations à l'invention.

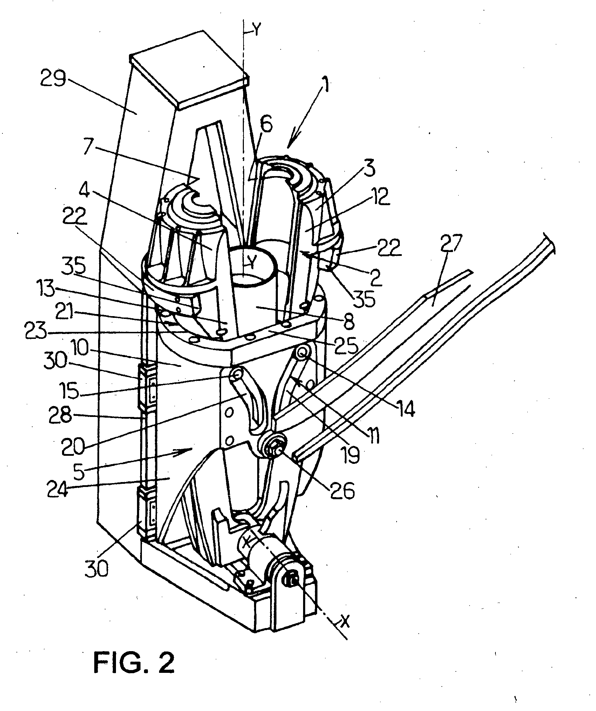

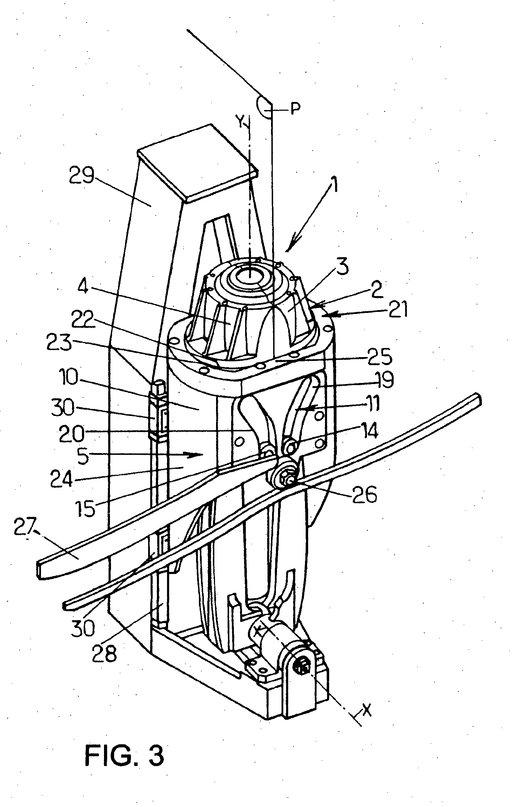

Le dispositif 1 de moulage comporte au moins un moule 2 comprenant au moins deux demi-moules 3, 4 et des moyens d'entraînement 5 (non représentés sur la figure 1 par mesure de clarté, mais représentés sur les figures 2, 3 et 7) propres à déplacer les demi-moules 3, 4 entre une position d'ouverture, représentée sur les figures 1 et 2, dans laquelle ils sont écartés l'un de l'autre et une position de fermeture, représentée sur le figure 3, dans laquelle ils sont étroitement accolés l'un contre l'autre par des faces 6, 7 d'appui respectives définissant un plan de joint P et dans laquelle ils définissent une cavité de moulage.

Plus précisément, les deux demi-moules 3, 4 définissent dans leur position de fermeture une cavité de moulage correspondant à l'empreinte du corps de l'ébauche soufflée.

Les deux demi-moules 3, 4 sont articulés l'un à l'autre en rotation autour d'un axe d'articulation X-X contenu dans le plan de joint P et perpendiculaire à l'axe de la cavité de moulage Y-Y, l'axe d'articulation X-X étant sous les deux demi-moules 3, 4.

Il est entendu par « axe de la cavité de moulage » l'axe de soufflage de la tuyère de soufflage.

L'axe d'articulation X-X est situé en dessous des deux demi-moules 3, 4 à distance de ceux-ci. Autrement dit, l'axe d'articulation X-X est situé plus près du niveau du sol que ne le sont les deux demi-moules 3, 4. De manière alternative, l'axe d'articulation X-X peut être directement prévu traversant les deux demi-moules 3, 4.

Le dispositif 1 de moulage comporte en outre un fond 8 de moule fixe et de forme complémentaire aux deux demi-moules 3, 4, de manière que les deux demi-moules 3, 4 s'emboîtent dans le fond 8 de moule en position de fermeture permettant de former une cavité de moulage étanche.

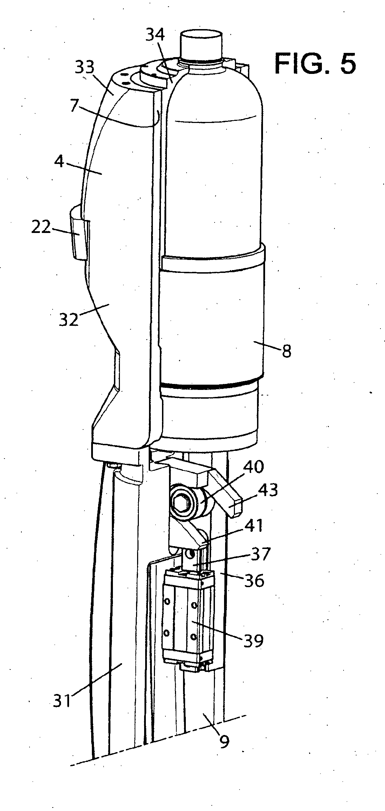

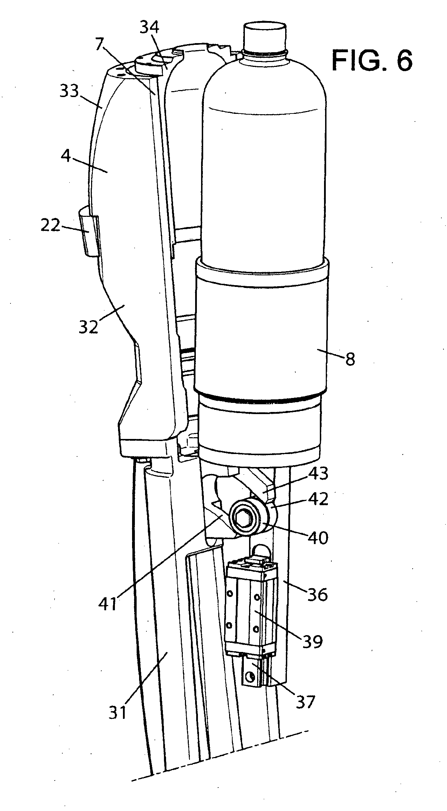

Préférentiellement, le fond 8 de moule est prévu fixé sur un montant 9 fixe et prévu sensiblement perpendiculairement à l'axe d'articulation X-X. Néanmoins, il est également possible de prévoir un fond 8 de moule axialement mobile propre à s'emboîter dans les deux demi-moules 3, 4 quand ils sont en position de fermeture (voir figures 5 et 6).

Les moyens 5 d'entraînement comprennent un équipage 10 mobile déplaçable selon une direction sensiblement parallèle à l'axe Y-Y de la cavité de moulage et coopérant avec les deux demi-moules 3, 4 de manière que, lorsque l'équipage 10 mobile est en position basse, les deux demi-moules 3, 4 sont en position d'ouverture et que, lorsque l'équipage 10 mobile est en position haute, les deux demi-moules 3, 4 sont en position de fermeture.

Les moyens 5 d'entraînement comprennent des moyens 11 à galets suiveurs et cames coopérants prévus sur les faces 12, 13 latérales des deux demi-moules 3, 4 au voisinage de leurs faces 6, 7 d'appui respectives et sur l'équipage 10 mobile.

Selon une première forme de réalisation et telle qu'illustrée sur les figures, deux galets 14, 15 suiveurs sont montés sur deux faces 12, 13 latérales appartenant respectivement aux deux demi-moules 3, 4 au voisinage de leurs faces 6, 7 d'appui respectives et deux cames 19, 20 sont prévues respectivement sur l'équipage 10 mobile.

Selon une seconde forme de réalisation (non représentée sur les figures) et de manière inversée par rapport à la première forme de réalisation, deux galets suiveurs sont montés sur l'équipage 10 mobile et deux cames sont prévues formées dans les deux faces 12, 13 latérales appartenant respectivement aux deux demi-moules 3, 4 au voisinage de leurs faces 6, 7 d'appui respectives.

Le dispositif 1 de moulage présente des moyens 21 de verrouillage des deux demi-moules 3, 4 dans leur position de fermeture, chaque demi-moule 3, 4 présentant une zone 22 surfacique extérieure apte à venir en butée contre une zone 23 surfacique intérieure des moyens 21 de verrouillage des deux demi-moules 3, 4 en position de fermeture, la zone 22 surfacique extérieure de chaque demi-moule 3, 4 étant de forme complémentaire à la zone 23 surfacique intérieure des moyens 21 de verrouillage, de manière que, quand les deux zones 22, 23 surfaciques sont mises en contact l'une contre l'autre, il en résulte la formation de deux efforts dirigés en sens inverse radialement vers l'intérieur sur les deux demi-moules 3, 4, et préférentiellement vers l'axe Y-Y de la cavité de moulage, de façon à mettre en oeuvre le principe d'arc-boutement, tel qu'il sera décrit de manière plus précise ultérieurement.

Selon une forme de réalisation, les zones 22, 23 surfaciques sont sensiblement tronconiques.

Selon le mode de réalisation illustré sur les figures, les moyens 21 de verrouillage sont incorporés dans les moyens 5 d'entraînement, à savoir que les moyens 21 de verrouillage appartiennent à l'équipage 10 mobile, qui se présente sous la forme d'un manchon 24 propre à entourer au moins partiellement les deux demi-moules 3, 4. Toutefois, de manière alternative, il est possible de prévoir que les moyens 21 de verrouillage se présentent sous toute forme permettant de maintenir accolés l'un contre l'autre les deux demi-moules 3, 4, par exemple à l'aide de moyens de type piston.

Les moyens 21 de verrouillage se présentent sous la forme d'une bride 25 appartenant aux moyens 5 d'entraînement des deux demi-moules 3, 4, c'est-à-dire à l'équipage 10 mobile, et propres à ceindre les demi-moules 3, 4 en position de fermeture.

Un galet 26 propre à coopérer avec une came 27 est fixé sur l'équipage 10 mobile de manière à commander le déplacement de l'équipage 10 mobile selon une direction sensiblement parallèle à l'axe Y-Y de la cavité de moulage.

Ainsi, il est représenté sur la figure 2 le dispositif 1 de moulage avec les deux demi-moules 3, 4 en position d'ouverture et le galet 26 en position basse juste avant son entrée dans la came 27 apte à commander la montée du galet 26 dans une position haute, telle que représentée sur la figure 3, et correspondant à la position de fermeture des deux demi-moules 3, 4.

L'équipage 10 mobile est apte à coulisser sur au moins un rail 28 de guidage prévu fixe par rapport à l'axe Y-Y de la cavité de moulage formé dans un élément support ou console 29 apte à être solidarisé à un carrousel rotatif permettant ainsi le placement d'une pluralité de dispositif 1 de moulage sur le pourtour du carrousel.

Préférentiellement, l'équipage 10 mobile est solidarisé à au moins un chariot 30 (préférentiellement deux chariots 30) apte à coulisser sur le rail 28 de guidage.

Chaque demi-moule 3, 4 comprend une partie 31 basse fixée à l'axe X-X d'articulation et une partie 32 haute comprenant au moins un porte-coquille 33 et une coquille 34 dans laquelle est formée au moins partiellement l'empreinte du récipient à mouler, les moyens 5 de verrouillage, préférentiellement la bride 25, des deux demi-moules 3, 4 en position de fermeture sont aptes à prendre appui sur les deux parties 32 hautes des deux demi-moules 3, 4.

Selon un mode de réalisation, un ruban 35 de butée est fixé sur la surface extérieure du porte-coquille 33, la zone surfacique extérieure du ruban 35 étant apte à venir en butée contre la zone surfacique 23 intérieure des moyens 5 de verrouillage des deux demi-moules 3, 4.

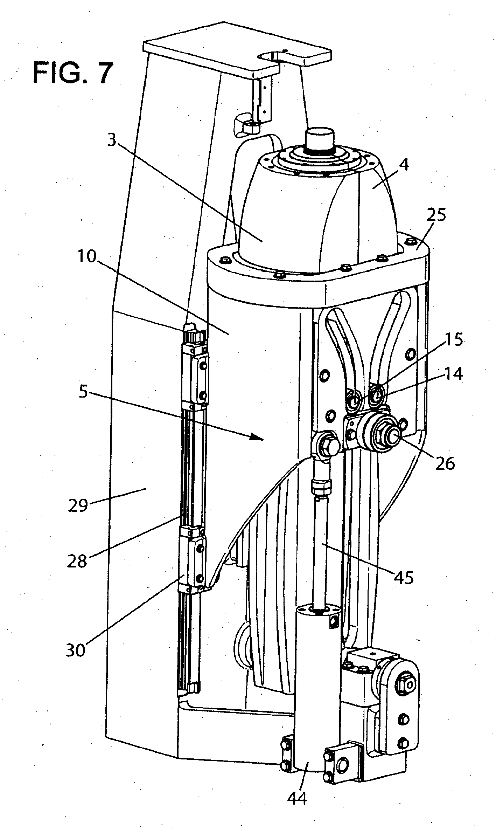

Le dispositif 1 de moulage selon l'invention comprend des moyens de rappel, préférentiellement des moyens 44 à piston et tels que décrits plus précisément ultérieurement en rapport avec la figure 7, entre l'équipage 10 mobile et l'élément ou console 29 support de l'axe X-X d'articulation, ce grâce à quoi le déplacement de remontée de l'équipage 10 mobile est facilité depuis la position d'ouverture vers la position de fermeture des deux demi-moules 3, 4.

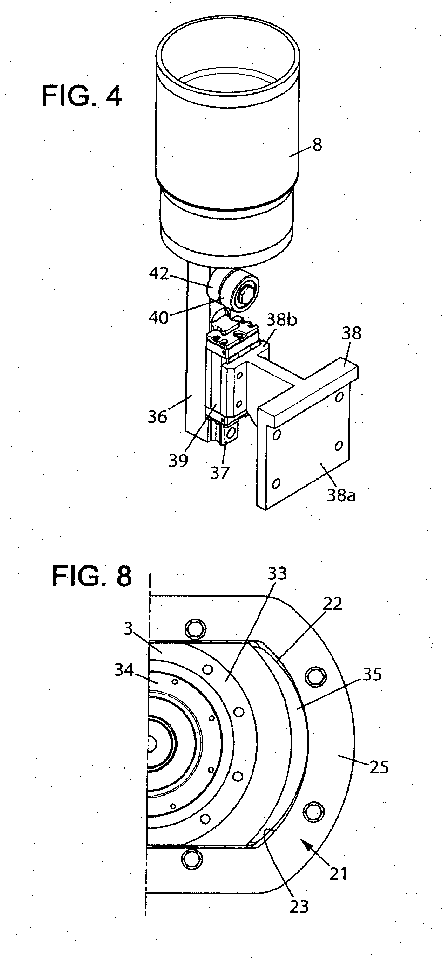

La figure 4 représente une vue partielle en perspective d'un fond 8 de moule prévu axialement mobile et solidarisé par des moyens de solidarisation, tels qu'illustrés à la figure 6, à un demi moule 4 du dispositif 1 de moulage selon l'invention.

De manière plus précise, il est prévu une tige 36 partant du fond 8 de moule, préférentiellement sensiblement coaxiale à l'axe de la cavité de moulage, et sur laquelle est fixé, par tout moyen connu en soi, un rail 37 de guidage.

Sur la console 29 est fixé un élément 38 de maintien sous la forme d'un élément en H avec une première plaque 38a fixée sur la console 29 et une seconde plaque 38b sur laquelle est fixé un chariot 39 apte à coulisser sur le rail 37 de guidage de la tige 36 du fond de moule 8.

Au moins un galet 40 propre à coopérer avec une came 41 est prévu fixé sur la tige 36. Préférentiellement il est prévu deux galets 40, 42 coopérant chacun avec une came 41, 43.

Dans un des deux demi-moules 3, 4, il est prévu au moins une came 41, 43 fixe, préférentiellement encastrée dans le demi-moule 3, 4, notamment dans la partie basse 31 du demi-moule 3, 4, avec une partie de la came 41, 43 en saillie de sorte à coopérer avec les galets 40, 42.

Les parties en saillie des cames 41, 43 sont conformées de manière telle qu'en position de fermeture des demi-moules 3, 4, le fond 8 de moule est en position haute (voir figure 5) et que le mouvement d'ouverture des demi-moules 3, 4 entraîne un mouvement de descente axiale du fond 8 de moule (voir figure 6).

La figure 7 est une vue en perspective du dispositif 1 de moulage selon l'invention dans lequel il est prévu un vérin 44 dont la tige 45 du piston est reliée à l'équipage 10 mobile et dont le corps est fixé sur la console 29.

Préférentiellement, le vérin 44 travaille entre deux pressions limites avec une pression élevée en position basse de l'équipage 10 mobile, les deux demi-moules 3, 4 étant alors dans leur position d'ouverture, et une pression faible en position haute de l'équipage 10 mobile, les deux demi-moules 3, 4 étant alors dans leur position de fermeture.

Plus précisément, la chambre basse du vérin 44 est mise à une pression telle que l'équipage 10 mobile a tendance à subir un mouvement de poussée de la part du vérin 44 par l'intermédiaire de sa tige 45.

De cette manière, le mouvement de remontée de l'équipage 10 mobile lors de son passage de la position basse à la position haute est facilitée, malgré la masse de l'équipage 10 mobile.

Il est bien entendu qu'il est possible de prévoir plus d'un seul vérin entre l'équipage 10 mobile et la console 29, ou de prévoir des moyens ressort.

Il est représenté sur la figure 8 une vue supérieure d'un demi-moule en position de fermeture et verrouillé par les moyens 21 de verrouillage.

Comme cela peut être remarqué que la figure 8, le ruban 35 de butée est en contact tangentiel avec les moyens 21 de verrouillage en position haute de l'équipage 10 mobile, c'est-à-dire en position de fermeture des deux demi-moules, mais uniquement en dehors du soufflage de l'ébauche, le ruban 35 de butée étant propre à être plaqué contre la surface 23 intérieure des moyens 21 de verrouillage lors du soufflage de l'ébauche.

## Revendications

1. Dispositif (1) de moulage pour la fabrication par soufflage ou étirage-soufflage de récipients à partir de préformes en matériau thermoplastique chauffé, ledit dispositif (1) comportant au moins un moule (2) comprenant au moins deux demi-moules (3, 4) et des moyens (5) d'entraînement propres à déplacer lesdits demi-moules (3, 4) entre une position d'ouverture dans laquelle ils sont écartés l'un de l'autre et une position de fermeture dans laquelle ils sont étroitement accolés l'un contre l'autre par des faces (6, 7) d'appui respectives définissant un plan (P) de joint et dans laquelle ils définissent une cavité de moulage, les deux demi-moules (3, 4) étant articulés l'un à l'autre en rotation autour d'un axe (X-X) d'articulation contenu dans le plan (P) de joint et perpendiculaire à l'axe (Y-Y) de la cavité de moulage, ledit axe (X-X) d'articulation étant sous les deux demi-moules (3, 4), des moyens (21) de verrouillage des deux demi-moules (3, 4) dans leur position de fermeture étant également prévus, chaque demi-moule (3, 4) présentant une zone (22) surfacique extérieure apte à venir en butée contre une zone (23) surfacique intérieure desdits moyens (21) de verrouillage des deux demi-moules (3, 4) en position de fermeture, la zone (22) surfacique extérieure de chaque demi-moule (3, 4) étant de forme complémentaire à la zone (23) surfacique intérieure des moyens (21) de verrouillage, de manière que, quand les deux zones (22, 23) surfaciques sont mises en contact l'une contre l'autre, il en résulte la formation de deux efforts dirigés en sens inverse radialement vers l'intérieur sur les deux demi-moules (3, 4), et lesdits moyens (21) de verrouillage se présentant sous la forme d'une bride (25) propre à ceindre les deux demi-moules (3, 4) en position de fermeture,
**caractérisé en ce que** les moyens (5) d'entraînement comprennent un équipage (10) mobile, se présentant sous la forme d'un manchon (24) propre à entourer au moins partiellement les deux demi-moules (3, 4), déplaçable selon une direction sensiblement parallèle à l'axe (Y-Y) de la cavité de moulage et coopérant avec les deux demi-moules (3, 4) de manière que, lorsque l'équipage (10) mobile est en position basse, les deux demi-moules (3, 4) sont en position d'ouverture et que, lorsque l'équipage (10) mobile est en position haute, les deux demi-moulés (3, 4) sont en position de fermeture et **en ce que** ladite bride (25) appartient auxdits moyens (5) d'entraînement des deux demi-moules (3, 4).

2. Dispositif de moulage selon la revendication précédente 1, **caractérisé en ce que** les zones (22, 23) surfaciques sont sensiblement tronconiques.

3. Dispositif de moulage selon la revendication 1 ou 2, **caractérisé en ce que** l'axe (X-X) d'articulation est situé en dessous des deux demi-moules (3, 4) à distance de ceux-ci.

4. Dispositif de moulage selon l'une quelconque des revendications 1 à 3, **caractérisé en ce que** les moyens (5) d'entraînement comprennent des moyens (11) à galets suiveurs et cames coopérants prévus sur les faces (12, 13) latérales des deux demi-moules (3, 4) au voisinage de leurs faces (6, 7) d'appui respectives et sur l'équipage (10) mobile.

5. Dispositif de moulage selon la revendication 4, **caractérisé en ce que** les moyens (5) d'entraînement comprennent deux galets (14, 15) suiveurs montés sur deux faces (12, 13) latérales appartenant respectivement aux deux demi-moules (3, 4) au voisinage de leurs faces (6, 7) d'appui respectives et deux cames (19, 20) prévues respectivement sur l'équipage (10) mobile.

6. Dispositif de moulage selon la revendication 4, **caractérisé en ce que** les moyens (5) d'entraînement comprennent deux galets suiveurs montés sur l'équipage (10) mobile et deux cames prévues sur deux faces (12, 13) latérales appartenant respectivement aux deux demi-moules (3, 4) au voisinage de leurs faces (6, 7) d'appui respectives.

7. Dispositif de moulage selon l'une quelconque des revendications 1 à 6, **caractérisé en ce que** les moyens (5) d'entraînement comprennent un galet (26) qui est propre à coopérer avec une came (27) et qui est fixé sur l'équipage (10) mobile de manière à commander ledit déplacement de l'équipage (10) mobile selon une direction sensiblement parallèle à l'axe (Y-Y) de la cavité de moulage.

8. Dispositif de moulage selon l'une quelconque des revendications 1 à 7, **caractérisé en ce que** les moyens (5) d'entraînement comprennent au moins un rail (28) de guidage qui est prévu fixe par rapport à l'axe (X-X) d'articulation et sur lequel l'équipage (10) mobile est apte à coulisser.

9. Dispositif de moulage selon la revendication 8, **caractérisé en ce que** le rail (28) de guidage est prévu sur un élément (29) support de l'axe (X-X) d'articulation des deux demi-moules (3, 4).

10. Dispositif de moulage selon la revendication 9, **caractérisé en ce que** les moyens (5) d'entraînement comprennent au moins un chariot (30) qui est apte à coulisser sur le rail (28) de guidage et auquel l'équipage (10) mobile est solidarisé.

11. Dispositif de moulage selon l'une quelconque des revendications 1 à 10, **caractérisé en ce qu'**il comprend des moyens de rappel, préférentiellement des moyens à piston (44), entre l'équipage (10) mobile et un élément (29) support de l'axe (X-X) d'articulation, ce grâce à quoi le déplacement de l'équipage (10) mobile est facilité depuis la position d'ouverture vers la position de fermeture des deux démi-moules (3, 4).

12. Dispositif de moulage selon l'une quelconque des revendications 1 à 11, **caractérisé en ce que** chaque demi-moule (3, 4) comprend une partie (31) basse fixée à l'axe (X-X) d'articulation et une partie (32) haute comprenant au moins un porte-coquille (33) et une coquille (34) dans laquelle est formée au moins partiellement l'empreinte du récipient à mouler.

13. Dispositif de moulage selon la revendication 12, **caractérisé en ce que** les moyens (21) de verrouillage des deux demi-moules (3, 4) en position de fermeture sont aptes à prendre appui sur les parties (32) hautes des deux demi-moules (3, 4).

14. Dispositif de moulage selon l'une quelconque des revendications 12 à 13, **caractérisé en ce qu'**un ruban (35) de butée est fixé sur la surface extérieure du porte-coquille (33), la zone surfacique extérieure du ruban (35) étant apte à venir en butée contre la zone (23) surfacique intérieure des moyens (21) de verrouillage des deux demi-moules (3, 4).

15. Dispositif de moulage selon l'une quelconque des revendications 1 à 14 comprenant en outre un fond (8) de moule, **caractérisé en ce que** le fond (8) de moule est axialement mobile et est couplé à l'aide de moyens de solidarisation à un des deux demi-moules (3, 4).

16. Dispositif de moulage selon la revendication 15, **caractérisé en ce que** les moyens de solidarisation comprennent au moins un galet (40, 42) qui est solidarisé au fond (8) de moule et qui est propre à coopérer avec au moins une came (41, 43) fixée sur un des deux demi-moules (3, 4), de sorte que le fond (8) de moule soit dans une position haute quand les deux demi-moules sont dans leur position de fermeture et que le fond (8) de moule soit dans une position basse quand les deux demi-moules sont dans leur position d'ouverture.

17. Dispositif de moulage selon l'une quelconque des revendications 15 à 16, **caractérisé en ce que** le ruban (35) de butée est en contact tangentiel avec les moyens (21) de verrouillage en position haute de l'équipage (10) mobile en dehors du soufflage de l'ébauche.

18. Dispositif de moulage selon l'une quelconque des revendications 15 à 17, **caractérisé en ce que** le ruban (35) de butée est propre à être plaqué contre la surface (23) intérieure des moyens (21) de verrouillage lors du soufflage de l'ébauche.

## Patentansprüche

1. Formvorrichtung (1) zur Herstellung von Gefäßen durch Blasen oder Ziehen-Blasen aus Vorformen aus einem erhitzten thermoplastischen Material, wobei die Vorrichtung (1) mindestens eine Form (2), die mindestens zwei Halbformen (3, 4) umfasst, und Antriebsmittel (5), die geeignet sind, die Halbformen (3, 4) zwischen einer Öffnungsposition, in der sie voneinander entfernt sind, und einer Verschlussposition, in der sie mit jeweiligen Stützflächen (6, 7), die eine Verbindungsebene (P) definieren, eng aneinander liegen, und in der sie einen Formungshohlraum definieren, umfasst, wobei die beiden Halbformen (3, 4) aneinander in Drehung um eine Gelenkachse (X-X), die in der Verbindungsebene (P) enthalten ist und auf die Achse (Y-Y) des Formungshohlraums senkrecht steht, angelenkt sind, wobei die Gelenkachse (X-X) unter den beiden Halbformen (3, 4) angeordnet ist, wobei Verriegelungsmittel (21) der beiden Halbformen (3, 4) in ihrer Verschlussposition ebenfalls vorgesehen sind, wobei jede Halbform (3, 4) eine äußere Oberflächenzone (22) aufweist, die geeignet ist, an einer inneren Oberflächenzone (23) der Verriegelungsmittel (21) der beiden Halbformen (3, 4) in Verschlussposition zur Anlage zu gelangen, wobei die äußere Oberflächenzone (22) jeder Halbform (3, 4) eine zu der inneren Oberflächenzone (23) der Verriegelungsmittel (21) komplementäre Form hat, so dass, wenn die beiden Oberflächenzonen (22, 23) miteinander in Kontakt gebracht werden, es zur Bildung von zwei Kräften kommt, die in entgegengesetzte Richtungen radial nach innen auf die beiden Halbformen (3, 4) gerichtet sind, wobei die Verriegelungsmittel (21) in Form eines Flansches (25) vorhanden sind, der geeignet ist, die beiden Halbformen (3, 4) in Verschlussposition zu umgeben,
**dadurch gekennzeichnet, dass** die Antriebsmittel (5) eine bewegliche Ausrüstung (10) umfassen, die in Form einer Manschette (24) vorhanden ist, die geeignet ist, zumindest teilweise die beiden Halbformen (3, 4) zu umgeben, und die in eine Richtung im Wesentlichen parallel zur Achse (Y-Y) des Formungshohlraums beweglich ist und mit den beiden Halbformen (3, 4) zusammenwirkt, so dass, wenn sich die bewegliche Ausrüstung (10) in der unteren Position befindet, die beiden Halbformen (3, 4) in Öffnungsposition sind, und wenn die bewegliche Ausrüstung (10) in der oberen Position ist, die beiden Halbformen (3, 4) in Verschlussposition sind, und dass der Flansch (25) den Antriebsmitteln (5) der beiden Halbformen (3, 4) angehört.

2. Formvorrichtung nach dem vorhergehenden Anspruch 1, **dadurch gekennzeichnet, dass** die Oberflächenzonen (22, 23) im Wesentlichen kegelstumpfartig sind.

3. Formvorrichtung nach Anspruch 1 oder 2, **dadurch gekennzeichnet, dass** die Gelenkachse (X-X) unter den beiden Halbformen (3, 4) in einem Abstand zu diesen angeordnet ist.

4. Formvorrichtung nach einem der Ansprüche 1 bis 3, **dadurch gekennzeichnet, dass** die Antriebsmittel (5) Mittel (11) mit Führungsrollen und Nocken umfassen, die auf den Seitenflächen (12, 13) der beiden Halbformen (3, 4) in der Nähe ihrer jeweiligen Stützflächen (6, 7) und auf der beweglichen Ausrüstung (10) vorgesehen sind.

5. Formvorrichtung nach Anspruch 4, **dadurch gekennzeichnet, dass** die Antriebsmittel (5) zwei Führungsrollen (14, 15), die auf zwei Seitenflächen (12, 13), die jeweils den beiden Halbformen (3, 4) angehören, in der Nähe ihrer jeweiligen Stützflächen (6, 7) montiert sind, und zwei Nocken (19, 20) umfassen, die jeweils auf der beweglichen Ausrüstung (10) vorgesehen sind.

6. Formvorrichtung nach Anspruch 4, **dadurch gekennzeichnet, dass** die Antriebsmittel (5) zwei Führungsrollen, die auf der beweglichen Ausrüstung (10) montiert sind, und zwei Nocken umfassen, die auf zwei Seitenflächen (12, 13), die jeweils den beiden Halbformen (3, 4) angehören, in der Nähe ihrer jeweiligen Stützflächen (6, 7) vorgesehen sind.

7. Formvorrichtung nach einem der Ansprüche 1 bis 6, **dadurch gekennzeichnet, dass** die Antriebsmittel (5) eine Rolle (26) umfassen, die geeignet ist, mit einer Nocke (27) zusammenzuwirken, und die auf der beweglichen Ausrüstung (10) derart befestigt ist, dass sie die Bewegung der beweglichen Ausrüstung (10) entlang einer Richtung im Wesentlichen parallel zur Achse (Y-Y) des Formungshohlraums steuert.

8. Formvorrichtung nach einem der Ansprüche 1 bis 7, **dadurch gekennzeichnet, dass** die Antriebsmittel (5) mindestens eine Führungsschiene (28) umfassen, die fest in Bezug zur Gelenkachse (X-X) vorgesehen ist, und auf der die bewegliche Ausrüstung (10) gleiten kann.

9. Formvorrichtung nach Anspruch 8, **dadurch gekennzeichnet, dass** die Führungsschiene (28) auf einem Tragelement (29) der Gelenkachse (X-X) der beiden Halbformen (3, 4) vorgesehen ist.

10. Formvorrichtung nach Anspruch 9, **dadurch gekennzeichnet, dass** die Antriebsmittel (5) mindestens einen Schlitten (30) umfassen, der auf der Führungsschiene (28) gleiten kann und mit dem die bewegliche Ausrüstung (10) verbunden ist.

11. Formvorrichtung nach einem der Ansprüche 1 bis 10, **dadurch gekennzeichnet, dass** sie Rückstellmittel, vorzugsweise Kolbenmittel (44), zwischen der beweglichen Ausrüstung (10) und einem Tragelement (29) der Gelenkachse (X-X) umfasst, weshalb die Bewegung der beweglichen Ausrüstung (10) von der Öffnungsposition in die Verschlussposition der beiden Halbformen (3, 4) erleichtert wird.

12. Formvorrichtung nach einem der Ansprüche 1 bis 11, **dadurch gekennzeichnet, dass** jede Halbform (3, 4) einen unteren Teil (31), der an der Gelenkachse (X-X) befestigt ist, und einen oberen Teil (32) umfasst, der mindestens einen Schalenträger (33) und eine Schale (34) umfasst, in der der Abdruck des zu formenden Gefäßes zumindest teilweise geformt wird.

13. Formvorrichtung nach Anspruch 12, **dadurch gekennzeichnet, dass** die Verriegelungsmittel (21) der beiden Halbformen (3, 4) in Verschlussposition geeignet sind auf den oberen Teilen (32) der beiden Halbformen (3, 4) zur Anlage zu gelangen.

14. Formvorrichtung nach einem der Ansprüche 12 bis 13, **dadurch gekennzeichnet, dass** ein Anschlagband (35) auf der Außenseite des Schalenträgers (33) befestigt ist, wobei die äußere Oberflächenzone des Bandes (35) geeignet ist, an der inneren Oberflächenzone (23) der Verriegelungsmittel (21) der beiden Halbformen (3, 4) zur Anlage zu gelangen.

15. Formvorrichtung nach einem der Ansprüche 1 bis 14, ferner umfassend einen Formboden (8), **dadurch gekennzeichnet, dass** der Formboden (8) axial beweglich und mit Hilfe von Verbindungsmitteln an eine der beiden Halbformen (3, 4) gekoppelt ist.

16. Formvorrichtung nach Anspruch 15, **dadurch gekennzeichnet, dass** die Verbindungsmittel mindestens eine Rolle (40, 42) umfassen, die mit dem Formboden (8) verbunden und geeignet ist, mit mindestens einer Nocke (41, 43) zusammenzuwirken, die auf einer der beiden Halbformen (3, 4) befestigt ist, so dass der Formboden (8) in einer oberen Position ist, wenn die beiden Halbformen in ihrer Verschlussposition sind, und der Formboden (8) in einer unteren Position ist, wenn die beiden Halbformen in ihrer Öffnungsposition sind.

17. Formvorrichtung nach einem der Ansprüche 15 bis 16, **dadurch gekennzeichnet, dass** das Anschlagband (35) mit den Verriegelungsmitteln (21) der beweglichen Ausrüstung (10) in der oberen Position, wenn kein Blasen des Rohlings stattfindet, in Tangentialkontakt ist.

18. Formvorrichtung nach einem der Ansprüche 15 bis 17, **dadurch gekennzeichnet, dass** das Anschlagband (35) geeignet ist, an die Innenfläche (23) der Verriegelungsmittel (21) beim Blasen des Rohlings angelegt zu werden.

## Claims

1. Moulding device (1) for blow-moulding or stretch-blow-moulding containers from heated thermoplastic preforms, said device (1) having at least one mould (2) comprising at least two half-moulds (3, 4) and drive means (5) that are able to move said half-moulds (3, 4) between an open position in which they are parted from one another and a closed position in which they are firmly pressed against one another via respective bearing faces (6, 7) defining a parting plane (P) and in which they define a mould cavity, the two half-moulds (3, 4) being articulated together in rotation about an articulation axis (X-X) that is contained in the parting plane (P) and perpendicular to the axis (Y-Y) of the mould cavity, said articulation axis (X-X) being beneath the two half-moulds (3, 4), means (21) for locking the two half-moulds (3, 4) in their closed position also being provided, each half-mould (3, 4) having an external surface region (22) that is able to come into abutment against an internal surface region (23) of said means (21) for locking the two half-moulds (3, 4) in the closed position, the external surface region (22) of each half-mould (3, 4) having a shape complementary to the internal surface region (23) of the locking means (21), such that, when the two surface regions (22, 23) are brought into contact with one another, this results in the formation of two forces directed in opposite directions radially towards the inside on the two half-moulds (3, 4), and said locking means (21) being in the form of a flange (25) that is able to encircle the two half-moulds (3, 4) in the closed position,
**characterized in that** the drive means (5) comprise a mobile assembly (10), in the form of a sleeve (24) that is able to at least partially surround the two half-moulds (3, 4), said mobile assembly (10) being movable in a direction approximately parallel to the axis (Y-Y) of the mould cavity and cooperating with the two half-moulds (3, 4) such that when the mobile assembly (10) is in a bottom position, the two half-moulds (3, 4) are in the open position, and when the mobile assembly (10) is in a top position, the two half-moulds (3, 4) are in the closed position, and **in that** said flange (25) belongs to said drive means (5) for the two half-moulds (3, 4).

2. Moulding device according to the preceding Claim 1, **characterized in that** the surface regions (22, 23) are approximately frustoconical.

3. Moulding device according to Claim 1 or 2, **characterized in that** the articulation axis (X-X) is located beneath the two half-moulds (3, 4) and at a distance therefrom.

4. Moulding device according to any one of Claims 1 to 3, **characterized in that** the drive means (5) comprise cooperating cam and follower roller means (11) provided on the lateral faces (12, 13) of the two half-moulds (3, 4) in the vicinity of their respective bearing faces (6, 7) and on the mobile assembly (10).

5. Moulding device according to Claim 4, **characterized in that** the drive means (5) comprise two follower rollers (14, 15) mounted on two lateral faces (12, 13) that belong respectively to the two half-moulds (3, 4) in the vicinity of their respective bearing faces (6, 7), and two cams (19, 20) provided respectively on the mobile assembly (10).

6. Moulding device according to Claim 4, **characterized in that** the drive means (5) comprise two follower rollers mounted on the mobile assembly (10), and two cams provided on two lateral faces (12, 13) that belong respectively to the two half-moulds (3, 4) in the vicinity of their respective bearing faces (6, 7).

7. Moulding device according to any one of Claims 1 to 6, **characterized in that** the drive means (5) comprise a roller (26) which is able to cooperate with a cam (27) and which is fixed to the mobile assembly (10) so as to control said movement of the mobile assembly (10) in a direction approximately parallel to the axis (Y-Y) of the mould cavity.

8. Moulding device according to any one of Claims 1 to 7, **characterized in that** the drive means (5) comprise at least one guide rail (28) which is provided in a fixed manner with respect to the articulation axis (X-X) and on which the mobile assembly (10) is able to slide.

9. Moulding device according to Claim 8, **characterized in that** the guide rail (28) is provided on a support element (29) of the articulation axis (X-X) of the two half-moulds (3, 4).

10. Moulding device according to Claim 9, **characterized in that** the drive means (5) comprise at least one carriage (30) which is able to slide on the guide rail (28) and to which the mobile assembly (10) is secured.

11. Moulding device according to any one of Claims 1 to 10, **characterized in that** it comprises return means, preferably piston means (44), between the mobile assembly (10) and a support element (29) of the articulation axis (X-X), thereby making it easier to move the mobile assembly (10) from the open position to the closed position of the two half-moulds (3, 4).

12. Moulding device according to any one of Claims 1 to 11, **characterized in that** each half-mould (3, 4) comprises a bottom part (31) fixed at the articulation axis (X-X) and a top part (32) comprising at least one shell holder (33) and a shell (34) in which the impression of the container to be moulded is at least partially formed.

13. Moulding device according to Claim 12, **characterized in that** the means (21) for locking the two half-moulds (3, 4) in the closed position are able to bear against the top parts (32) of the two half-moulds (3, 4).

14. Moulding device according to either one of Claims 12 and 13, **characterized in that** a stop strip (35) is fixed to the external surface of the shell holder (33), the external surface region of the strip (35) being able to bear against the internal surface region (23) of the means (21) for locking the two half-moulds (3, 4).

15. Moulding device according to any one of Claims 1 to 14, also comprising a mould bottom (8), **characterized in that** the mould bottom (8) is axially mobile and is coupled to one of the two half-moulds (3, 4) with the aid of securing means.

16. Moulding device according to Claim 15, **characterized in that** the securing means comprise at least one roller (40, 42) which is secured to the mould bottom (8) and which is able to cooperate with at least one cam (41, 43) fixed to one of the two half-moulds (3, 4), such that the mould bottom (8) is in a top position when the two half-moulds are in their closed position and the mould bottom (8) is in a bottom position when the two half-moulds are in their open position.

17. Moulding device according to either one of Claims 15 and 16, **characterized in that** the stop strip (35) is intangential contact with the locking means (21) in the top position of the mobile assembly (10) when the blank is not being blow-moulded.

18. Moulding device according to any one of Claims 15 to 17, **characterized in that** the stop strip (35) is able to be pressed against the internal surface (23) of the locking means (21) when the blank is being blow-moulded.
